Europäisches Patentamt

European Patent Office

Office européen des brevets

(19)

(11) Veröffentlichungsnummer : **0 040 448**
**B2**

(12) **NEUE EUROPÄISCHE PATENTSCHRIFT**

(45) Veröffentlichungstag der neuen Patentschrift :
**20.01.88**

(21) Anmeldenummer : **81200501.5**

(22) Anmeldetag : **12.05.81**

(51) Int. Cl.⁴ : **F 16 C 33/20**, F 16 C 33/28

(54) **Gleitlagerwerkstoff.**

(30) Priorität : **17.05.80 DE 3018974**

(43) Veröffentlichungstag der Anmeldung :
**25.11.81 Patentblatt 81/47**

(45) Bekanntmachung des Hinweises auf die Patenterteilung : **05.10.83 Patentblatt 83/40**

(45) Bekanntmachung des Hinweises auf die Entscheidung über den Einspruch : **20.01.88 Patentblatt 88/03**

(84) Benannte Vertragsstaaten :
**DE FR GB IT SE**

(56) Entgegenhaltungen :
DC-A-30 963
DE-A- 2 205 008
DE-A- 2 818 184
DE-C- 2 001 101
FR-A- 1 445 542
FR-A- 2 207 553
US-A- 2 976 093

(73) Patentinhaber : **KOLBENSCHMIDT Aktiengesellschaft**
**Karl-Schmidt-Strasse 8/12 Postfach 1351**
**D-7107 Neckarsulm (DE)**

(72) Erfinder : **Bickle, Wolfgang**
**Friedenstrasse 13**
**D-6831 Reilingen (DE)**
Erfinder : **Funke, Rolf, Dipl.-Ing.**
**Im Kirchbrändel 8**
**D-7525 Bad Schönborn II (DE)**
Erfinder : **Pfoh, Rolf, Dipl.-Ing.**
**Weinbergstrasse 10 a**
**D-6909 Rauenberg (DE)**
Erfinder : **Täffner, Hans, Ing. grad.**
**Wilhelmstrasse 43**
**D-7107 Neckarsulm (DE)**

(74) Vertreter : **Rieger, Harald, Dr.**
**Reuterweg 14**
**D-6000 Frankfurt am Main (DE)**

## Beschreibung

Die Erfindung betrifft einen folienartigen Gleitlagerwerkstoff, bestehend aus einem mit einem Gemisch aus 10 bis 50 Vol.% Glasfasern, 5 bis 25 Vol.% Blei und 40 bis 80 Vol.% Polytetrafluoräthylen beschichteten Aluminiumgitter.

Folienartige Gleitlagerwerkstoffe, bestehend aus einem Metallgewebe, bei dem die sich kreuzenden Drähte an ihren Kreuzungspunkten durch aufgesintertes Fluorpolymer gegeneinander fixiert sind, sind seit Jahren, insbesondere zur Auskleidung von Lagerbuchsen und Lagerschalen, bekannt (DD-A-30 963). Das Fluorpolymer kann mit gläsernen oder anderen anorganischen Fasern gefüllt und in Form einer Mischung mit einem Gleitmittel auf das Metallgewebe aufgewalzt oder aufgepreßt werden (DE-C-2 001 101). Der Nachteil eines solchen folienartigen Gleitlagerwerkstoffs besteht darin, daß das Metallgewebe beim Stanzen oder Schneiden, bei der späteren Verarbeitung oder bei der Verwendung, insbesondere an den Randbereichen, ausfasert. Darüber hinaus besteht die Gefahr, daß ausgefaserte Drähte in den Lagerspalt gelangen, wodurch das Lager beschädigt bzw. nach relativ kurzer Betriebszeit zerstört wird. Um diese Nachteile zu vermeiden, ist in der DE-A-2 205 008 ein folienartiger Gleitlagerwerkstoff vorgesehen, der aus einem Metallgewebe besteht, das mit einem aufgesinterten Fluorpolymer beschichtet ist, wobei die Kreuzungspunkte der sich kreuzenden Drähte durch eine thermische Nachbehandlung miteinander verschweißt sind. Nachteilig wirkt sich jedoch seine relativ geringe Formstabilität bei der Montage aus, wodurch das automatische Einlegen des folienartigen Gleitlagerwerkstoffs in Lagerbuchsen und -schalen behindert wird.

Es ist die Aufgabe der vorliegenden Erfindung, die Formstabilität des folienartigen Gleitlagerwerkstoffs so zu verbessern, daß dieser problemlos in der automatischen Lagerfertigung eingesetzt werden kann und für eine automatische Montage geeignet ist.

Die Lösung dieser Aufgabe erfolgt durch ein aus einer Aluminium-Knetlegierung des Typs AlMgSil oder AlMg3 mit einer Bruchdehnung von $\delta_5 = 8$ bis 20 % und einer Brinellhärte HB 35 bis 65 bestehendes Streckmetall, dessen Maschenweite (b × L) 0,5 × 1 bis 2 × 3 mm, vorzugsweise 1 × 2 mm und dessen Stegbreite (c) 0,3 bis 1,0 mm, vorzugsweise 0,5 mm betragen.

Zweckmäßigerweise beträgt der Durchmesser der Glasfasern 0,005 bis 0,020 mm, vorzugsweise 0,01 mm und die Länge der Glasfasern 0,1 bis 1 mm, vorzugsweise 0,5 bis 0,75 mm.

Ein solcher Gleitlagerwerkstoff, der beliebige Schnitte oder Stanzungen erlaubt, besitzt eine vergleichsweise hohe Formstabilität, so daß er problemlos in der automatischen Lagerfertigung eingesetzt werden kann.

Falls die auf den Stegen des Streckmetallgitters befindliche Fluorpolymerschicht abgetragen ist, besitzt das Streckmetallgitter selbst sehr gute Notlaufeigenschaften.

Die Verwendung von aus Aluminium bestehendem Streckmetall als Trägermaterial für einen Gleitlagerwerkstoff ist ganz allgemein aus der DE-A-2 818 184 bekannt.

Die Erfindung ist in der Zeichnung beispielhaft dargestellt und wird nachfolgend näher erläutert :

Für das Streckmetallgitter wurde eine Aluminium-Knetlegierung des Typs AlMg3 verwendet, mit einer Zugfestigkeit $\delta_B = 180$ N/mm², 0,2-Grenze $\delta_{0,2} = 80$ N/mm², einer Bruchdehnung $\delta_5 = 17$ % und einer Brinellhärte von HB = 45 verwendet. Die Maschenweite betrug 1 × 2 mm und die Stegbreite 0,5 mm. Das Streckmetallgitter wurde mit einem Füllstoff der Zusammensetzung 10 % Bleipulver, 30 % Glasfaser und 60 % Polytetrafluoräthylen beschichtet. Eine weitere bevorzugte Ausführung des Gleitlagerwerkstoffs hat die Zusammensetzung 60 Vol.% PTFE, 20 Vol.% Pb und 20 Vol.% Glasfaser.

Figur 1 zeigt eine Draufsicht auf ein mit der Beschichtung 1 versehenes Streckmetallgitter 2, wobei die Stege 3 gestrichelt angedeutet, die Maschenlänge des Gitters mit L und die Maschenbreite mit b angegeben sind.

In Figur 2 ist ein Querschnitt entlang der Schnittlinie I-I der Figur 1 dargestellt, wobei die Dicke der Beschichtung 1 über dem Streckmetallgitter mit s und die Dicke des Steckmetallgitters 2 mit a angegeben sind.

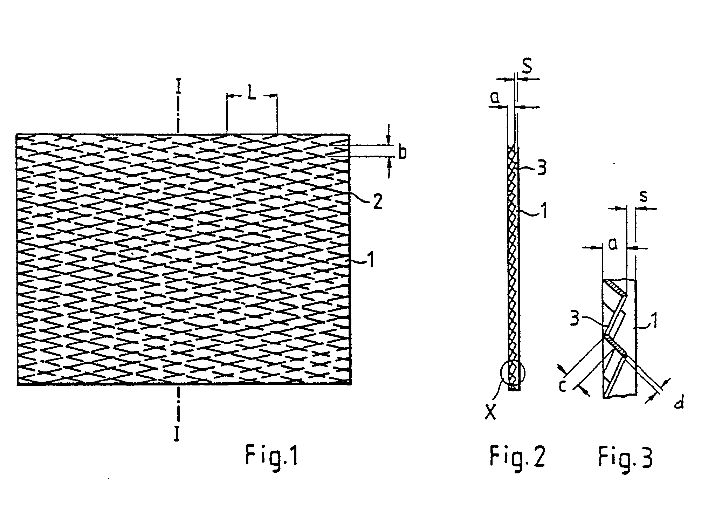

Eine ausschnittsweise vergrößerte Darstellung X der Figur 2 ist in Figur 3 wiedergegeben, wobei die Stegbreite mit c und die Stegdicke mit d eingezeichnet sind.

## Patentansprüche

1. Folienartiger Gleitlagerwerkstoff, bestehend aus einem mit einem Gemisch aus 10 bis 50 Vol.% Glasfasern, 5 bis 25 Vol.% Blei und 40 bis 80 Vol.% Polytetrafluoräthylen beschichteten Aluminiumgitter, gekennzeichnet durch ein aus einer Aluminium-Knetlegierung des Typs AlMgSil oder AlMg3 mit einer Bruchdehnung $\delta_5 = 8$ bis 20 % und einer Brinellhärte HB 35 bis 65 bestehendes Streckmetall (2), wobei die Maschenweite (b × L) des Streckmetalls (2) 0,5 × 1 bis 2 × 3 mm und die Stegbreite (c) 0,3 bis 1,0 mm betragen.

2. Gleitlagerwerkstoff nach Anspruch 1, dadurch gekennzeichnet, daß die Maschenweite 1 × 2 mm und die Stegbreite 0,5 mm betragen.

3. Gleitlagerwerkstoff nach den Ansprüchen 1 oder 2, dadurch gekennzeichnet, daß der Durchmesser der Glasfasern 0,005 bis 0,020 mm, vorzugsweise 0,01 mm und die Länge 0,1 bis 1 mm, vorzugsweise 0,5 bis 0,75 mm, betragen.

## Claims

1. A sheet material for sliding surface bearings, consisting of an aluminium grid that is coated with a mixture of 10 to 50 % by volume glass fibres, 5 to 25 % by volume lead and 40 to 80 % by volume polytetrafluoroethylene, characterized by an expanded metal (2), which consists of an aluminium wrought alloy of the type AlMgSil or AlMg3 and has an elongation at rupture $\delta_5$ = 8 to 20 % and a Brinell hardness number HBN between 35 and 65, wherein the expanded metal (2) has a mesh size (width times length) between 0.5 mm × 1 mm and 2 mm × 3 mm and a land width (c) between 0.3 and 1.0 mm.

2. A material for sliding surface bearings according to claim 1, characterized in that the mesh size is 1 mm × 2 mm and the land width is 0.5 mm.

3. A material for sliding surface bearings according to claim 1 or 2, characterized in that the glass fibres are between 0.005 and 0.020 mm, preferably 0.01 mm, in diameter and have a length between 0.1 and 1 mm, preferably 0.5 and 0.75 mm.

**Revendications**

1. Matériau pour paliers lisses de type en feuilles, constitué d'une grille d'aluminium revêtue d'un mélange de 10 à 50 % en volume de fibres de verre, de 5 à 25 % en volume de plomb et de 40 à 80 % en volume de polytétrafluoroéthylène, caractérisé par un métal déployé (2) en un alliage corroyé d'aluminium du type AlMgSil ou AlMg3, ayant un allongement à la rupture $\delta_5$ de 8 à 20 %, et une dureté Brinell HB de 35 à 65, l'ouverture de maille (b x L) du métal déployé (2) étant comprise entre 0,5 x 1 et 2 x 3 mm et la largeur des parties pleines (c) étant comprise entre 0,3 et 1,0 mm.

2. Matériau pour paliers lisses suivant la revendication 1, caractérisé en ce que l'ouverture de maille est de 1 x 2 mm et la largeur des parties pleines est de 0,5 mm.

3. Matériau pour paliers lisses suivant les revendications 1 ou 2, caractérisé en ce que le diamètre des fibres de verre est compris entre 0,005 et 0,020 mm, et est égal de préférence à 0,01 mm et leur longueur est comprise entre 0,1 et 1 mm et de préférence entre 0,5 mm et 0,75 mm.

Fig.1

Fig.2

Fig.3